# EUROPEAN PATENT SPECIFICATION

(11) **EP 3 864 960 B1**
(45) Date of publication and mention of the grant of the patent: **05.03.2025**
(21) Application number: 21154076.0
(22) Date of filing: 28.01.2021
(51) Int. Cl.: A01N 1/02

(54) **ORGAN CONTAINER**
ORGANBEHÄLTER
RÉCIPIENT D'ORGANE

(30) Priority: 14.02.2020 JP 2020023246
(43) Date of publication of application: 18.08.2021
(73) Proprietor: SCREEN Holdings Co., Ltd., Kyoto-shi, Kyoto 602-8585 (JP)
(72) Inventor: TORAI, Shinji, Kyoto-Shi, Kyoto 602-8585 (JP); KOBAYASHI, Eiji, Kyoto-Shi, Kyoto 602-8585 (JP)
(74) Representative: Kilian Kilian & Partner mbB

(56) References cited:
- EP-A1- 3 791 720
- WO-A1-2019/106936
- WO-A1-2020/059413
- WO-A1-2021/026614
- CN-A- 107 969 419
- CN-U- 208 338 763

## Description

### BACKGROUND OF THE INVENTION

### Field of the Invention

The present invention relates to an organ container that accommodates an organ. Description of the Background Art

In organ transplant operations, an organ removed from a donor is preserved under cooled conditions. This is because if the organ is left at ordinary temperatures and the blood flowing from and to the organ is stopped, i.e., the organ gets into a so-called warm ischemic state, the organ becomes easy to deteriorate due to metabolism in the organ. Specifically, the temperature of the organ is kept low through procedures such as pouring a low-temperature preservation solution into the isolated organ or directly spraying ice-slush saline around the organ. This suppresses organ metabolism.

However, when an organ is transplanted into a recipient, the organ is placed in the body cavity of the recipient and undergoes procedures such as vascular anastomosis. At this time, the organ cannot be kept under cooled conditions, so that the temperature of the organ rises due to the body temperature of the recipient or the outside air temperature and the organ gradually gets into a warm ischemic state. Hence, the surgeon carrying out the transplant operation has to perform procedures such as vascular anastomosis within a period of time as short as possible or to maintain the organ to be transplanted in a low-temperature state by, for example, pouring ice or other materials into the abdominal cavity. In the latter case, not only the organ but also the fingertips of the surgeon will be cooled at the same time, and this is disadvantageous for vascular anastomosis that requires high precision.

In view of this, the inventors of the present application have proposed a technique described in Japanese Patent Application Laid-Open No. 2018-000309 in which, when an organ is transplanted into a recipient, a sheet having a heat insulation function is inserted between the recipient and the organ to suppress a temperature rise in the organ.

However, according to Japanese Patent Application Laid-Open No. 2018-000309, as a usage pattern of the sheet when an organ is transplanted into a recipient, the sheet is either simply placed on the organ or simply wrapping the organ. Accordingly, there is a possibility that the organ may be exposed as a result of slipping or coming off from the sheet. In this case, a temperature rise may occur in the organ.

EP 3 791 720 A1 and WO 2021/026614 A1 are prior art documents according to Art. 54(3) EPC.

A further prior art document is CN 208 338 763 U. This prior art document discloses a cooling bag for kidney transplantation operation, including a cooling bag body and a heat shield.

However, none of these prior art documents shows an insulating sheet of an organ container, which has an inner surface with linear projections having a square shape in section and square corners with a taper surface, or linear projections having a semicircular shape in section.

### SUMMARY OF THE INVENTION

It is an object of the present invention to provide an organ container that, when an organ is transplanted into a recipient, suppresses slipping or coming off of the organ while accommodating the organ in an insulating sheet. The object is achieved by the subject matter of the independent claims. Further advantageous embodiments and modifications of the invention are the subject matter of the pending dependent claims.

A first aspect of the present application is an organ container for accommodating an organ according to one of claims 1 and 7.

According to the first aspect of the present application, when an organ is transplanted into a recipient, the organ is accommodated in the pouch-shaped insulating sheet of the organ container, and an uneven shape of the inner surface of the insulating sheet suppresses slipping or coming off of the organ from the insulating sheet. This enables carrying out anastomosis to blood vessels while suppressing a temperature rise in the organ caused by the body temperature of the recipient or the outside air temperature. As a result, it is possible to reduce the possibility that the organ may get into a warm ischemic state and to reduce the occurrence of troubles after operation. The uneven shape of the inner surface of the insulating sheet also allows a preservation solution for cooling to be held in the interstices between the organ and the inner surface of the insulating sheet. This further suppresses a temperature rise in the organ.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an external view of an organ container and an organ according to a first embodiment;
Fig. 2 is a perspective view of the organ container according to the first embodiment;
Fig. 3 is a top view of the organ container according to the first embodiment;
Fig. 4 is a longitudinal sectional view of the organ container according to the first embodiment;
Fig. 5 is a longitudinal sectional view of the organ container according to the first embodiment;
Fig. 6 is a longitudinal sectional view of an organ container according to a variation;
Fig. 7 is a flowchart illustrating a procedure for a transplant operation using the organ container;
Fig. 8 is a longitudinal sectional view of an organ container according to a second embodiment;
Fig. 9 is a longitudinal sectional view of an organ container according to a variation;
Fig. 10 is a longitudinal sectional view of an organ container according to another variation;
Fig. 11 is a longitudinal sectional view of an organ container according to yet another variation;
Fig. 12 is a longitudinal sectional view of an organ container according to yet another variation; and
Fig. 13 is a perspective view of an organ container according to a third embodiment.

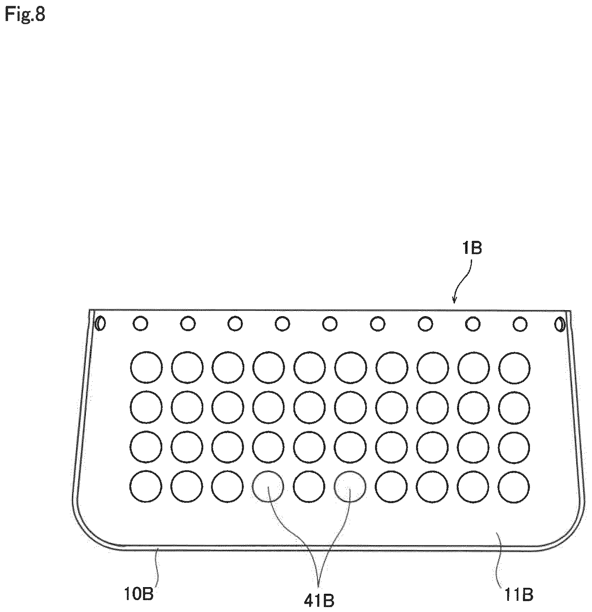

The embodiments illustrated in figures 8 to 12 do not fall under the scope of the claims.

### DESCRIPTION OF THE PREFERRED EMBODIMENTS

Embodiments of the present invention will be described hereinafter with reference to the drawings.

In the present application, "donors" and "recipients" may be humans, or may be non-human animals. That is, "organs" according to the present application may be human organs, or may be organs of non-human animals. The non-human animals may be rodents such as mice and rats, ungulates such as pigs, goats, and sheep, non-human primates such as chimpanzees, or other non-human mammals, or may also be nonmammalian animals.

### 1. First Embodiment

### 1-1. Organ Container

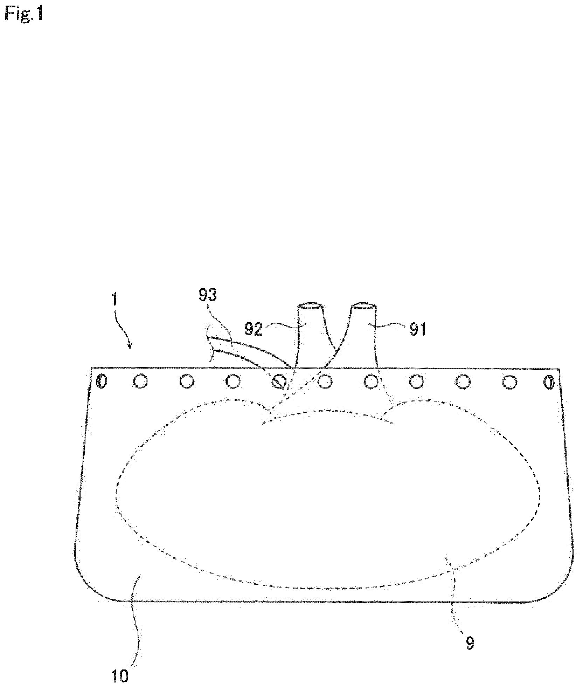

Fig. 1 is an external view of an organ container 1 and an organ 9 accommodated in the organ container 1 according to a first embodiment as viewed from one side. This organ container 1 is a container for temporarily accommodating an organ 9 that is removed from a donor in a transplant operation for transplanting the organ into the recipient. That is, the organ container 1 is a medical appliance for use for the purpose of a transplant operation with the organ 9.

Examples of the organ 9 to be accommodated in the organ container 1 include a kidney, a heart, and a lung. Blood vessels 91 and 92 of such an organ 9 that are to be anastomosed in a transplant operation are concentrated on one side of the organ 9. The structure of the organ container 1 according to the present embodiment is particularly suitable for such an organ 9. However, the organ container 1 according to the present invention may also be used to accommodate other organs such as a liver.

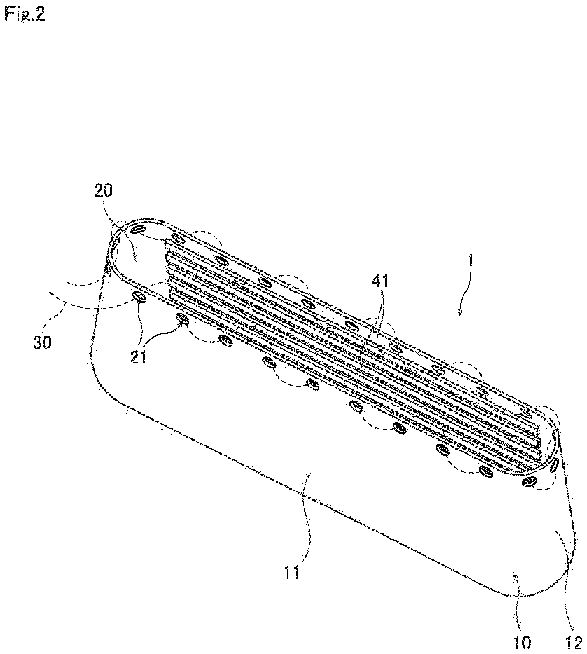

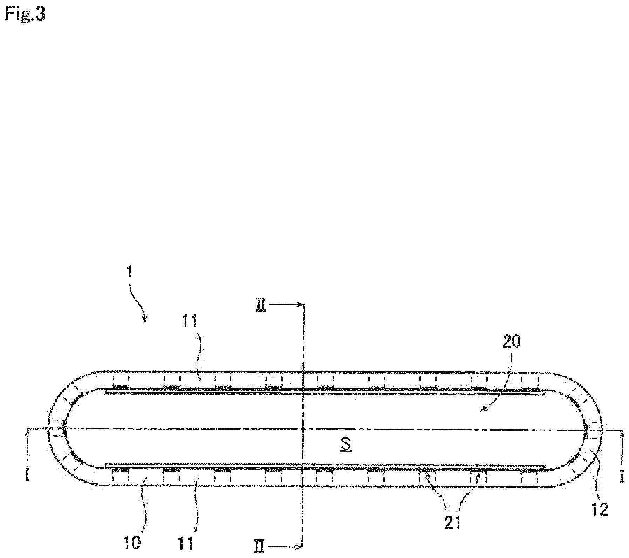

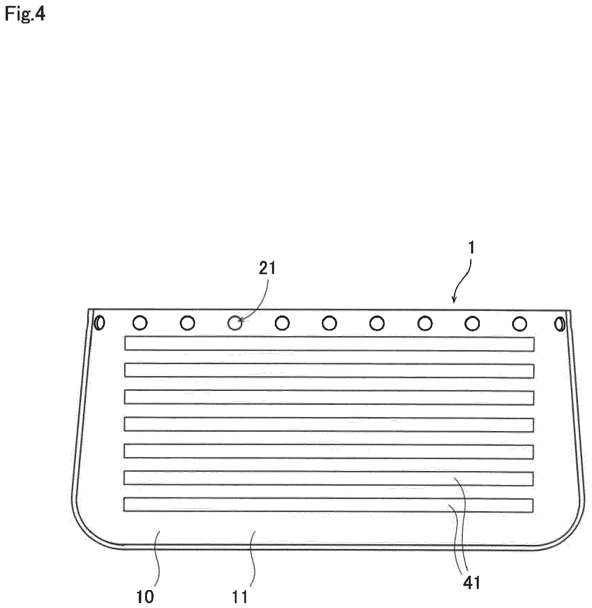

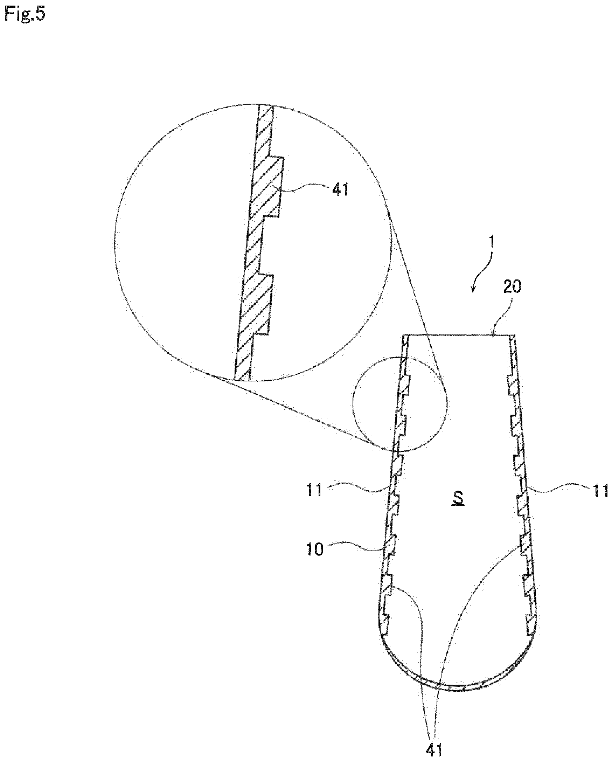

Fig. 2 is a perspective view of the organ container 1. Fig. 3 is a top view of the organ container 1. Fig. 4 is a longitudinal sectional view of the organ container 1 as viewed from a position I-I in Fig. 3. Fig. 5 is a longitudinal sectional view of the organ container 1 as viewed from a position II-II in Fig. 3. As illustrated in Figs. 1 to 5, the organ container 1 according to the present embodiment includes a single seamless pouch-shaped insulating sheet 10 that holds the organ 9. Alternatively, the organ container 1 may be configured in a pouch shape by stitching, bonding, or welding two or more insulating sheets 10.

The organ container 1 has a generally oval shape. In particular, this organ container 1 is configured to accommodate a kidney. In the present embodiment, the insulating sheet 10 as a whole is made in a generally oval shape so that the inner surface of the insulating sheet 10 is shaped to easily fit along the surface of the kidney. The shape of the insulating sheet 10 is, however, not limited to this shape. The organ container 1 is also made in a slightly larger size than the size of the organ 9 to be accommodated therein, so as to facilitate insertion and removal of the organ 9 and to prevent easy movement of the organ 9 in the interior. The organ container 1 may also have bottom and side gussets 12. Accordingly, there is a wide space inside the organ container 1. Note that the gussets 12 are not absolutely necessary.

The organ container 1 also has an ellipsoidal opening 20. In its open state, the opening 20 has a size that allows passage of the organ 9. Note that the shape of the opening 20 may be a perfect circle, and may be arbitrarily set depending on the type and shape of the organ 9. The insulating sheet 10 has a plurality of insertion holes 21. The insertion holes 21 are arranged along the edge of the opening 20. Each of the insertion holes 21 penetrates the insulating sheet 10 in a thickness direction. For example, one drawstring 30 is inserted in through the plurality of insertion holes 21 as indicated by broken lines in Fig. 2. As the drawstring 30, for example, a sterilized thread for operation is used. The drawstring 30 may be a thread made of silk or nylon. The drawstring 30 may also be a string having no stretching properties, or may be a stretchable string made of an elastic material such as rubber (elastomer).

When the organ 9 has been inserted from the opening 20 into the insulating sheet 10 and then the drawstring 30 has been pulled, the opening 20 of the organ container 1 contracts like a drawstring bag. Accordingly, the opening 20 is closed and the organ 9 is held in the insulating sheet 10. This suppresses slipping or coming off of the organ 9 from the insulating sheet 10. Note that the opening 20 may be caused to constrict by using only a single drawstring 30 and pulling this drawstring 30 on one end side of the insulating sheet 10 as in the present embodiment, or the opening 20 may be caused to constrict by using two drawstrings 30 and pulling these drawstrings 30 on the opposite end sides of the insulating sheet 10. That is, the drawstring 30 needs only be used to cause at least part of the opening 20 to constrict. The use of the drawstring 30 is, however, not absolutely necessary. For example, if the organ 9 and an internal space S of the insulating sheet 10 are of approximately the same size, it is possible to suppress slipping or coming off of the organ 9 from the insulating sheet 10 without causing the opening 20 to constrict after insertion of the organ 9 in the insulating sheet 10.

The insulating sheet 10 is made of a porous material or a cloth that has a heat insulation property as well as biocompatibility and a sterilization retention property. Specifically, commercially available medical thermoplastic silicone rubber with a thickness greater than or equal to 1 mm, which is easily obtainable, is used as the material for the insulating sheet 10 according to the present embodiment. Using the commercially available material reduces the manufacturing cost (initial cost) of the organ container 1. Using the medical thermoplastic silicone rubber provides high biocompatibility and reduces deleterious effects on the organ 9 that is in contact with the insulating sheet 10.

Using the silicone rubber with a thickness greater than or equal to 1 mm improves the heat insulation property of the insulating sheet 10. Accordingly, when the organ 9 is accommodated in the insulating sheet 10, it is possible to suppress transfer of the temperature outside the insulating sheet 10 (the body temperature of the recipient or the outside air temperature) or conduction of heat generated from a variety of equipment used in the transplant operation to the organ 9 accommodated in the insulating sheet 10. As a result, the organ 9 in the insulating sheet 10 can be maintained at a lower temperature. In order to verify the heat insulation property of the insulating sheet 10 according to the present embodiment, silicone rubber for use as the insulating sheet 10 was laid on a stage whose surface has a temperature of 37°C, and the organ 9 cooled to 4°C was placed on that stage. In this case, it is confirmed that the temperature of the organ 9 can be maintained at 20°C or less for 30 minutes or more. Alternatively, instead of silicone rubber, polyvinylidene fluoride, polyurethane, fluoropolymers, fluorine rubber, polyurethane rubber, vinyl chloride, nylon, polyethylene, polyurethane elastomer, or an oil bleeding silicone gel may be used as the material for the insulating sheet 10.

The insulating sheet 10 according to the present embodiment has a heat resistance temperature higher than or equal to 190°C. This high heat resistance performance of the insulating sheet 10 reduces the occurrence of cracks and damage on the insulating sheet 10 even if the temperature outside the insulating sheet 10 increases. As a result, it is possible to stably hold the organ 9. Because the heat insulation property of the insulating sheet 10 can be maintained, the organ 9 in the insulating sheet 10 can also be maintained at a lower temperature.

The insulating sheet 10 according to the present embodiment has, for example, a hardness of A40 to A50 (or D10 to E70) measured through a durometer hardness test compliant with Japanese Industrial Standards JIS K 6253-3:2012. In this way, the insulating sheet 10 with an appropriate hardness is less likely to break and reduces influences on the organ 9 even if an impact is applied to the insulating sheet 10 that accommodates the organ 9.

Moreover, the inner surface of the insulating sheet 10 has an uneven shape. The uneven shape according to the present embodiment includes a plurality of linear projections 41. Each of the linear projections 41 projects toward the internal space S of the pouch-shaped insulating sheet 10. Besides, each of the linear projections 41 according to the present embodiment is approximately parallel to the edge of the opening 20. Note that each of the linear projections 41 may be slightly inclined to the edge of the opening 20. As illustrated in the partial enlarged view in Fig. 5, the linear projections 41 according to the present embodiment have a square shape in section. The linear projections 41 are provided on the inner surface of a pair of opposite side portions 11 of the insulating sheet 10. Note that the linear projections 41 may be provided on the entire inner surface of the insulating sheet 10, or may be provided on only part of the inner surface of the insulating sheet 10.

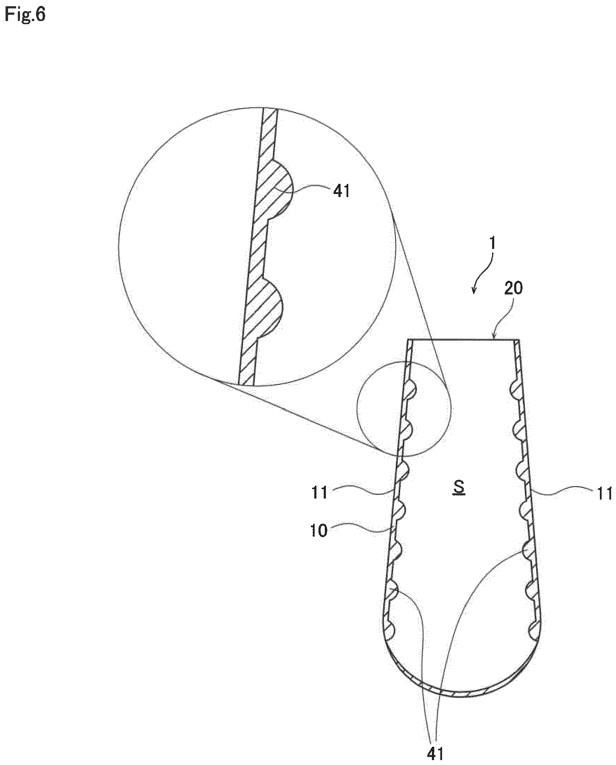

In accordance with one aspect of the present invention, square corners of the linear projections 41 in cross section further have a taper surface. Alternatively, the linear projections 41 have a semicircular shape in section as illustrated as a variation in Fig. 6. This further prevents the organ 9 held in the insulating sheet 10 from being damaged or having traces of the uneven shape left thereon.

In the present embodiment, the insulating sheet 10 has the above-described configuration, and when the organ 9 is transplanted into a recipient, the uneven shape of the insulating sheet 10 suppresses slipping or coming off of the organ 9 accommodated in the insulating sheet 10 from the insulating sheet 10. The organ 9 can be held in the insulating sheet 10 without being damaged by the uneven shape nor without having traces of the uneven shape left thereon. As a result, it is possible to carry out anastomosis to the blood vessels while stably holding the organ 9 in the insulating sheet 10 and maintaining the organ 9 at lower temperatures. This reduces the possibility that the organ 9 may get into a warm ischemic state and suppresses the occurrence of troubles after operation.

In the present embodiment, the inner surface of the insulating sheet 10 has an uneven shape, and with the organ 9 accommodated in the insulating sheet 10, a plurality of grooves are formed in the interstices between the organ 9 and the inner surface of the insulating sheet 10. Each of the grooves extends in the horizontal direction. Then, a preservation solution can be held in each of the grooves. This further suppresses a temperature rise in the organ 9.

### 1-2. Procedure for Organ Transplantation

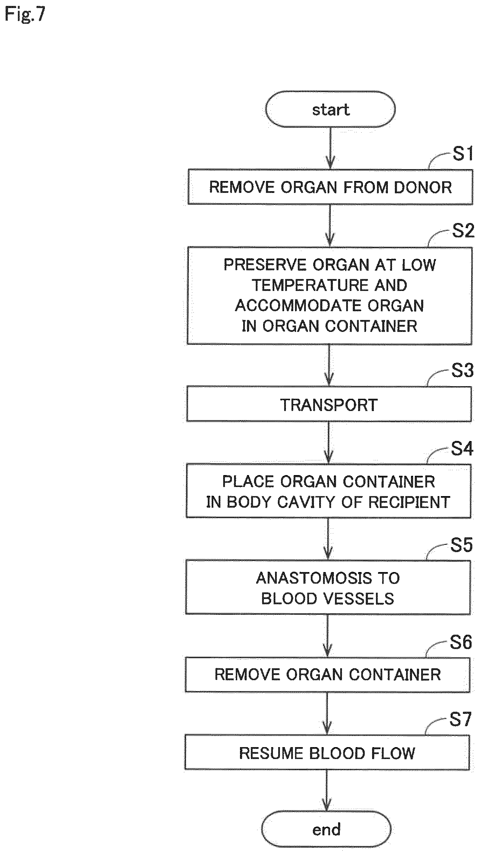

Next is a description of a procedure for a transplant operation in which the organ 9 removed from a donor is transplanted into a recipient, using the above-described organ container 1. In the present embodiment, the organ 9 is assumed to be a kidney. Fig. 7 is a flowchart illustrating the procedure for the transplant operation using the organ container 1.

In the transplant operation, first, the organ 9 is removed from a donor (step S1). Specifically, blood vessels 91 and 92 and an ureter 93 (see Fig. 1) that extend from the organ 9 of the donor are cut, and the organ 9 is taken out of the body cavity of the donor.

The removed organ 9 is preserved while being immersed in a low-temperature preservation solution. The organ 9 is also accommodated in the organ container 1 (step S2). The preservation solution is, for example, saline kept at 4°C. In general, if the organ is left at ordinary temperatures and the blood flowing from and to the organ is stopped, i.e., the organ gets into a so-called warm ischemic state, the organ becomes easy to deteriorate due to metabolism in the organ. Thus, in step S2, the organ 9 is preserved at a temperature lower than ordinary temperatures so as to suppress deterioration of the organ 9.

In step S2, tubes may be connected to the blood vessels 91 and 92 of the organ 9, and the organ 9 may be preserved while being perfused with a preservation solution. Note that the perfusion using the preservation solution may continue until step S4, which will be described later.

The timing when the organ 9 is accommodated in the organ container 1 may be before the organ 9 is immersed in the preservation solution or after the organ 9 is immersed in the preservation solution for a while and cooled sufficiently. When the organ 9 is accommodated in the organ container 1, the opening 20 of the organ container 1 is opened, and the organ 9 is inserted through the opening 20 into the internal space S of the pouch-shaped insulating sheet 10. In this way, the organ 9 is held in the insulating sheet 10.

At this time, a low-temperature preservation solution is poured into the interstices (the above-described grooves) between the organ 9 and the inner surface of the insulating sheet 10, using a syringe or a pipette. Then, the drawstring 30 is pulled to close the opening 20 of the organ container 1. This prevents slipping or coming off of the organ 9 from the organ container 1. Note that only the blood vessels 91 and 92 and the ureter 93 of the organ 9 are left exposed to the outside through the opening 20. The blood vessels 91 and 92 are anastomosed to the blood vessels of the recipient in step S5, which will be described later. The organ 9 embraced by the organ container 1 is further immersed again in a low-temperature preservation solution and maintained in a low-temperature preservation condition.

The organ 9 held by the organ container 1 is transported from the donor side to the recipient side while being immersed in the low-temperature preservation solution (step S3). The organ 9 transported to the recipient side continues to be held by the organ container 1 and immersed in the low-temperature preservation solution until just before transplantation.

Then, the abdomen of the recipient is opened, and the organ container 1 which accommodates therein the organ 9 is placed in the body cavity of the recipient (step S4). Then, the blood vessels of the recipient are anastomosed to the blood vessels 91 and 92 of the organ 9 that are exposed to the outside through the opening 20 of the organ container 1 (step S5). When the organ to be transplanted is a kidney, the ureter 93 is also connected to the urinary bladder.

During the work from steps S2 to S5, blood has not yet flowed from and to the inside of the organ 9. During the work from steps S4 to S5, the organ 9 accommodated in the organ container 1 is placed within the body cavity of the recipient. However, since the organ 9 is accommodated in the organ container 1 and covered with the insulating sheet 10, the organ 9 is less susceptible to the influence of the outside temperature (the body temperature of the recipient or the outside air temperature) or the influence of the heat generated from a variety of equipment used in the transplant operation. During the work from steps S2 to S5, the organ 9 is stably held by the uneven shape of the inner surface of the insulating sheet 10 that includes the projections 41. This suppresses slipping or coming off of the organ 9 from the insulating sheet 10. As a result, it is possible to carry out anastomosis to the blood vessels while suppressing a temperature rise in the organ 9. This reduces the possibility that the organ 9 may get into a warm ischemic state and deteriorate progressively due to metabolism. As a result, it is possible to suppress the occurrence of troubles after operation.

In steps S4 and S5, a low-temperature preservation solution is poured at regular intervals into the organ container 1, using a syringe or a pipette. For example, the low-temperature preservation solution is poured every several minutes into the organ container 1. The preservation solution already existing in the organ container 1 is collected using a drain and discharged to the outside of the body of the recipient. Note that the preservation solution already existing inside the organ container 1 is a slightly warmed preservation solution. This further suppresses a temperature rise in the organ 9 accommodated in the insulating sheet 10.

Since the organ 9 is accommodated in the insulating sheet 10 having an adequate hardness, even if some sort of impact is applied to the organ during operation, the insulating sheet 10 can absorb this impact and thereby suppresses damage to the organ 9. Besides, since the insulating sheet 10 has a pouch shape, the end sections of the insulating sheet 10 are less likely to hinder the work of the surgeon.

Thereafter, the opening 20 of the organ container 1 is opened, and the organ 9 that has undergone vascular anastomosis is taken out of the organ container 1. Then, the organ container 1 is removed from the body cavity of the recipient (step S6). Thereafter, the blood flow from the anastomosed blood vessels of the recipient to the organ 9 or vice versa is resumed (step S7).

In step S6, the surgeon opens the opening 20 of the organ container 1 by loosening the drawstring 30. This structure enables the surgeon to readily open and close the opening 20. This structure also reduces the possibility that the organ 9 is damaged by such opening and closing operations.

### 2. Second Embodiment

Next, a second embodiment will be described, which does not form part of the present invention. The following description focuses on differences from the above-described first embodiment and omits parts of a redundant description of points similar to those in the first embodiment.

Fig. 8 is a longitudinal sectional view of an organ container 1B according to the second embodiment. Note that a variation of the longitudinal sectional view as viewed from the position I-I in Fig. 3 is illustrated in Fig. 8. The organ container 1B according to the present embodiment differs from the organ container according to the above-described first embodiment in the structure of the uneven shape of the inner surface of an insulating sheet 10B.

The uneven shape of the inner surface of the insulating sheet 10B according to the present embodiment includes a plurality of spot-like projections 41B. Each of the spot-like projections 41B projects toward an internal space of the pouch-shaped insulating sheet 10B. The spot-like projections 41B according to the present embodiment each have a circular shape as viewed in a direction perpendicular to the inner surface of the insulating sheet 10B. The spot-like projections 41B are provided on the inner surface of side portions 11B of the insulating sheet 10B. Alternatively the spot-like projections 41B may be provided on the entire inner surface of the insulating sheet 10B.

In the present embodiment, the insulating sheet 10B has the above-described structure, and when the organ 9 is transplanted into a recipient in the same manner as in the first embodiment, the uneven shape of the insulating sheet 10B suppresses slipping or coming off of the organ 9 accommodated in the insulating sheet 10B from the insulating sheet 10B. Besides, the organ 9 is held in the insulating sheet 10B without being damaged by the uneven shape nor without having traces of the uneven shape left thereon. As a result, it is possible to carry out anastomosis to the blood vessels while stably holding the organ 9 in the insulating sheet 10B and maintaining the organ 9 at low temperatures. Moreover, it is also possible to reduce the possibility that the organ 9 may get into a warm ischemic state and to suppress the occurrence of troubles after operation.

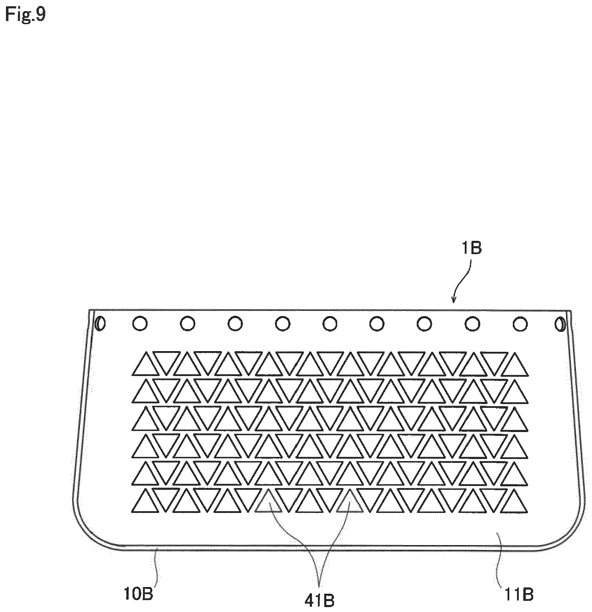

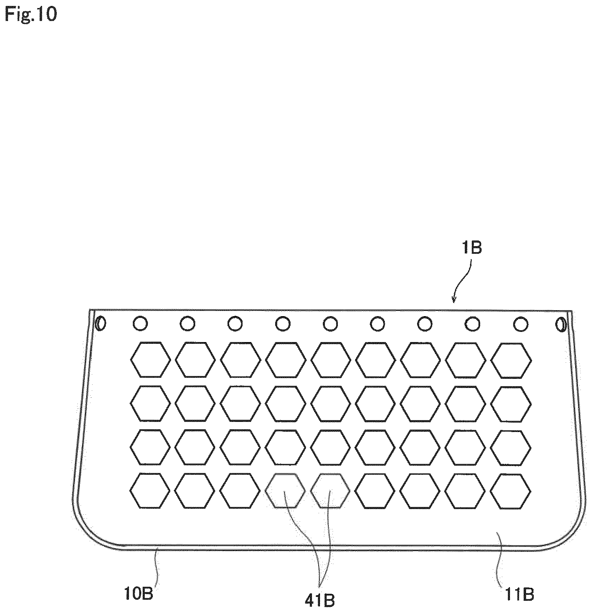

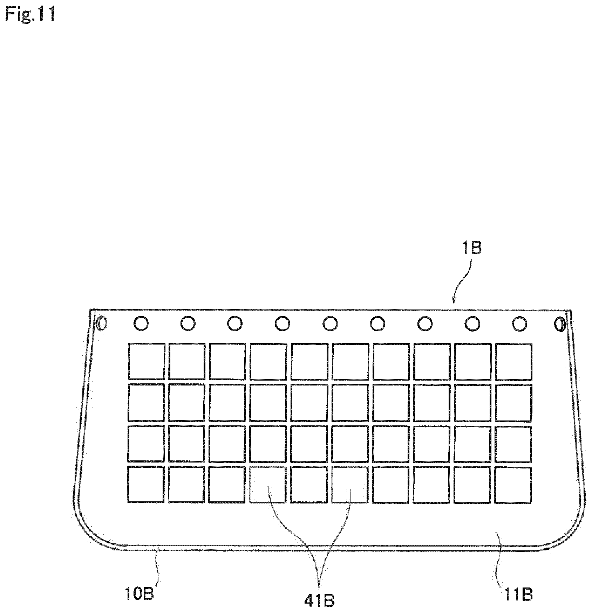

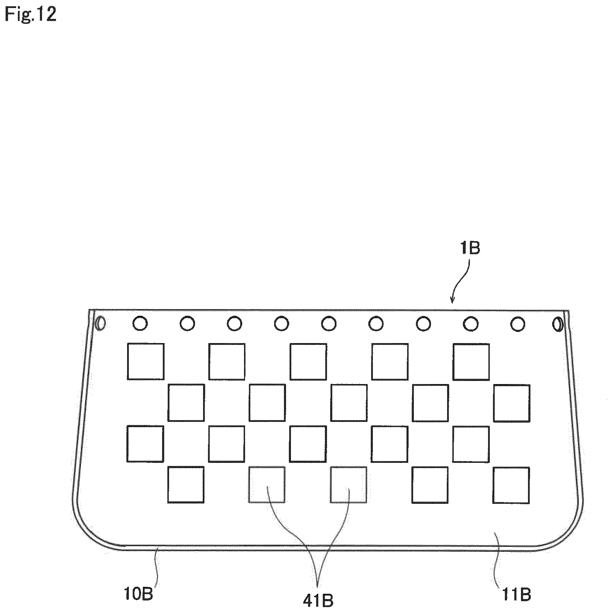

As illustrated in a variation in Fig. 9, each of the spot-like projections 41B may have a triangular shape as viewed in the direction perpendicular to the inner surface of the insulating sheet 10B. As illustrated in another variation in Fig. 10, each of the spot-like projections 41B may have a hexagonal shape as viewed in the direction perpendicular to the inner surface of the insulating sheet 10B. As illustrated in yet another variation in Fig. 11, each of the spot-like projections 41B may have a square shape as viewed in the direction perpendicular to the inner surface of the insulating sheet 10B. As illustrated in yet another variation in Fig. 12, each of the spot-like projections 41B may have a square shape as viewed in the direction perpendicular to the inner surface of the insulating sheet 10B and may be arranged away from each other. Moreover, the spot-like projections 41B may be arranged at equal intervals, or may be arranged at irregular intervals.

That is, the uneven shape needs only include a plurality of projections formed on the inner surface of the insulating sheet, projecting toward the internal space of the insulating sheet, and having a polygonal, circular or any other shape (e.g., semi-circular or crescent shape) as viewed in the direction perpendicular to the inner surface of the insulating sheet. These projections of a polygonal, circular, or any other shape may be arranged at arbitrary positions on the inner surface of the insulating sheet and may be of an arbitrary size.

### 3. Third Embodiment

Next, a third embodiment will be described, which does not form part of the present invention. The following description focuses on differences from the above-described first and second embodiments and omits parts of a redundant description of points that are similar to those in the first and second embodiments.

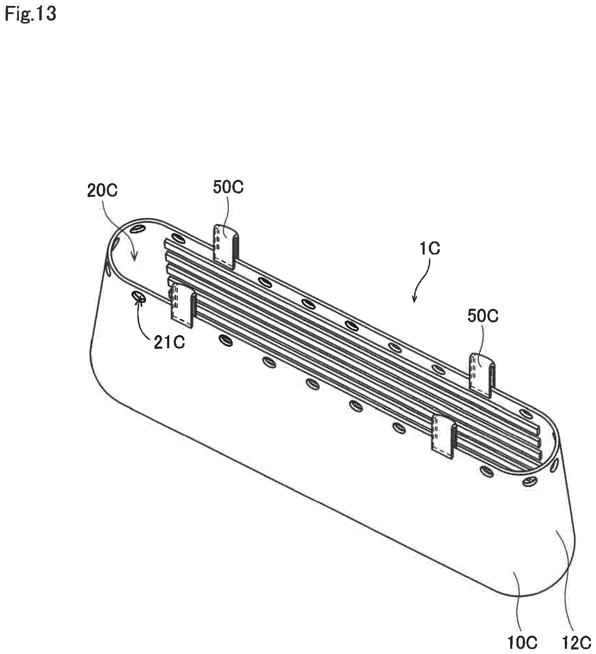

Fig. 13 is a perspective view of an organ container 1C according to the third embodiment. As illustrated in Fig. 13, the organ container 1C according to the present embodiment includes a single seamless pouch-shaped insulating sheet 10C that holds the organ 9 as in the first and second embodiments. The organ container 1C has a generally oval shape. The organ container 1C has bottom and side gussets 12C.

The organ container 1C also has an opening 20C. In its open state, the opening 20C has a size that allows passage of the organ 9. The insulating sheet 10C has a plurality of insertion holes 21C. The insertion holes 21C are arranged along the edge of the opening 20C. Each of the insertion holes 21C penetrates the insulating sheet 10C in the thickness direction.

In the present embodiment, each of the insertion holes 21C is fixed to a clip 50C. The clip 50 is detachable from the insertion hole 21C. For example, a string (not shown) for suspending the organ container 1C may be prepared, and the clips 50C may be attached to the tip of the string. In this case, by attaching the clips 50C as necessary to the insertion holes 21C during the transplant operation, it is possible to readily support the organ container 1C. Note that the usage application of the clips 50C is not limited to the above example.

### 4. Variations

While several embodiments of the present invention have been described thus far, the present invention is not intended to be limited to the above-described embodiments.

In the above-described embodiments and variations, the inner surface of each insulating sheet has one type of the uneven shape. However, the inner surface of the insulating sheet may have a plurality of types of uneven shapes. For example, the inner surface of the insulating sheet in the vicinity of the opening may have an uneven shape including a plurality of linear projections, and the inner surface of the insulating sheet in an area away from the opening may have an uneven shape including a plurality of spot-like projections. Moreover, a plurality of types of uneven shapes may be formed at regular intervals on the inner surface of the insulating sheet, or may be formed at irregular intervals.

While the insulating sheets of the organ containers according to the above-described embodiments are each made of one type of material, the present invention is not limited to these examples. The insulating sheet may be made of a plurality of types of materials. Moreover, a coating may be applied to the outer surface of the insulating sheet in order to prevent external damage.

A detailed structure of the organ container does not necessarily have to completely match with the structure illustrated in each drawing of the present application. Each component given in the embodiments and variations described above may be combined appropriately within a range that causes no contradictions.

The configurations of the preferred embodiments and variations described above may be appropriately combined as long as there are no mutual inconsistencies.

While the invention has been shown and described in detail, the foregoing description is in all aspects illustrative and not restrictive. It is therefore understood that numerous modifications and variations can be devised without departing from the subject-matter of the claims.

## Claims

1. An organ container (1) for accommodating an organ, comprising:
an opening (20) that allows passage of the organ (9); and
a pouch-shaped insulating sheet (10) configured to hold the organ (9) inserted through said opening (20),
wherein said insulating sheet (10) has an inner surface of an uneven shape which includes a plurality of linear projections (41) parallel to an edge of said opening and projecting toward an internal space of said pouch-shaped insulating sheet (10),
said plurality of linear projections (41) have a square shape in section, and
square corners of said plurality of linear projections (41) in cross section further have a taper surface.

2. The organ container according to claim 1, wherein
said insulating sheet (10) is made of medical silicone rubber.

3. The organ container according to claim 2, wherein
said insulating sheet (10) is made of thermoplastic silicone rubber.

4. The organ container according to claim 2 or 3, wherein
said insulating sheet (10) has a thickness greater than or equal to 1 mm.

5. The organ container according to any one of claims 1 to 4, wherein
said insulating sheet (10) has a hardness of A40 to A50 measured through a durometer hardness test compliant with Japanese Industrial Standards JIS K 6253-3:2012.

6. The organ container according to any one of claims 1 to 5, wherein
said insulating sheet (10) has a heat resistance temperature higher than or equal to 190°C.

7. An organ container (1) for accommodating an organ, comprising:
an opening (20) that allows passage of the organ (9); and
a pouch-shaped insulating sheet (10) configured to hold the organ (9) inserted through said opening (20),
wherein said insulating sheet (10) has an inner surface of an uneven shape which includes a plurality of linear projections (41) parallel to an edge of said opening and projecting toward an internal space of said pouch-shaped insulating sheet (10), and
said plurality of linear projections (41) have a semicircular shape in section.

8. The organ container according to any one of claims 1 tc 7, further comprising:
a plurality of insertion holes (21) provided along an edge of said opening (20); and
a drawstring (30) that is configured to be inserted in through said plurality of insertion holes (21) and to cause at least part of said opening to constrict.

## Patentansprüche

1. Organbehälter (1) zur Aufnahme eines Organs, umfassend:
eine Öffnung (20), die einen Durchgang des Organs (9) ermöglicht; und
eine beutelförmige Isolierfolie (10), die eingerichtet ist, das durch die Öffnung (20) eingeführte Organ (9) zu halten,
wobei die Isolierfolie (10) eine innere Oberfläche mit einer ungleichmäßigen Form aufweist, die eine Vielzahl von linearen Vorsprüngen (41) parallel zu einer Kante der Öffnung, und vorstehend in Richtung eines Innenraums der beutelförmigen Isolierfolie (10), umfasst,
die Vielzahl von linearen Vorsprüngen (41) im Schnitt eine quadratische Form aufweist, und
quadratische Ecken der Vielzahl von linearen Vorsprüngen (41) im Querschnitt außerdem eine konische Oberfläche aufweisen.

2. Organbehälter gemäß Anspruch 1, wobei
die Isolierfolie (10) aus medizinischem Silikonkautschuk besteht.

3. Organbehälter gemäß Anspruch 2, wobei
die Isolierfolie (10) aus thermoplastischem Silikonkautschuk besteht.

4. Organbehälter gemäß Anspruch 2 oder 3, wobei
die Isolierfolie (10) eine Dicke von 1 mm oder mehr aufweist.

5. Organbehälter gemäß einem der Ansprüche 1 bis 4, wobei
die Isolierfolie (10) eine Härte von A40 bis A50 aufweist, gemessen durch einen Durometer-Härtetest, der den japanischen Industrienormen JIS K 6253-3:2012 entspricht.

6. Organbehälter gemäß einem der Ansprüche 1 bis 5, wobei
die Isolierfolie (10) eine Wärmebeständigkeitstemperatur von 190°C oder mehr aufweist.

7. Organbehälter (1) zur Aufnahme eines Organs, umfassend:
eine Öffnung (20), die einen Durchgang des Organs (9) ermöglicht; und
eine beutelförmige Isolierfolie (10), die eingerichtet ist, das durch die Öffnung (20) eingeführte Organ (9) zu halten,
wobei die Isolierfolie (10) eine innere Oberfläche mit einer ungleichmäßigen Form aufweist, die eine Vielzahl von linearen Vorsprüngen (41) parallel zu einer Kante der Öffnung, und vorstehend in Richtung eines Innenraums der beutelförmigen Isolierfolie (10), umfasst,
die Vielzahl der linearen Vorsprünge (41) im Schnitt eine halbkreisförmige Form aufweist.

8. Organbehälter gemäß einem der Ansprüche 1 bis 7, ferner aufweisend:
eine Vielzahl von Einführungslöchern (21), die entlang einer Kante der Öffnung (20) vorgesehen sind; und
einen Kordelzug (30), der eingerichtet ist, durch die Vielzahl von Einführungslöchern (21) eingeführt zu werden und zu bewirken, dass sich zumindest ein Teil der Öffnung verengt.

## Revendications

1. Récipient pour organe (1) destiné à recevoir un organe, comprenant :
une ouverture (20) qui permet le passage de l'organe (9) ; et
une feuille isolante (10) en forme de poche, configurée pour contenir l'organe (9) inséré à travers ladite ouverture (20),
ladite feuille isolante (10) ayant une surface intérieure d'une forme irrégulière qui comprend une pluralité de projections linéaires (41) parallèles à un bord de ladite ouverture et faisant saillie vers un espace interne de ladite feuille isolante en forme de poche (10),
ladite pluralité de projections linéaires (41) ayant une forme carrée en section, et
les coins carrés de ladite pluralité de projections linéaires (41) en coupe transversale présentant en outre une surface effilée.

2. Récipient pour organe selon la revendication 1, dans lequel
ladite feuille isolante (10) est fabriquée en caoutchouc de silicone médical.

3. Récipient pour organe selon la revendication 2, dans lequel
ladite feuille isolante (10) est fabriquée en caoutchouc de silicone thermoplastique.

4. Récipient pour organe selon la revendication 2 ou 3, dans lequel
ladite feuille isolante (10) a une épaisseur supérieure ou égale à 1 mm.

5. Récipient pour organe selon l'une quelconque des revendications 1 à 4, dans lequel
ladite feuille isolante (10) a une dureté de A40 à A50 mesurée par un essai de dureté au duromètre conforme aux normes industrielles japonaises JIS K 6253-3:2012.

6. Récipient pour organe selon l'une quelconque des revendications 1 à 5, dans lequel
ladite feuille isolante (10) a une température de résistance à la chaleur supérieure ou égale à 190 °C.

7. Récipient pour organe (1) destiné à recevoir un organe, comprenant :
une ouverture (20) qui permet le passage de l'organe (9) ; et
une feuille isolante (10) en forme de poche, configurée pour contenir l'organe (9) inséré à travers ladite ouverture (20),
ladite feuille isolante (10) ayant une surface intérieure d'une forme irrégulière qui comprend une pluralité de projections linéaires (41) parallèles à un bord de ladite ouverture et faisant saillie vers un espace intérieur de ladite feuille isolante en forme de poche (10), et
ladite pluralité de projections linéaires (41) ayant une forme semi-circulaire en section.

8. Récipient pour organe selon l'une quelconque des revendications 1 à 7, comprenant en outre :
une pluralité de trous d'insertion (21) prévus le long d'un bord de ladite ouverture (20) ; et
un cordon de serrage (30) qui est configuré pour être inséré dans la pluralité de trous d'insertion (21) et pour amener au moins une partie de l'ouverture à se rétrécir.
